# FASCICULE DE BREVET EUROPEEN

(11) **EP 2 079 984 B1**
(45) Date de publication et mention de la délivrance du brevet: **11.06.2014**
(21) Numéro de dépôt: 07821631.4
(22) Date de dépôt: 22.10.2007
(51) Int. Cl.: G06T 17/05, G01C 21/26

(54) **PROCEDE DE CONSTRUCTION D'UN MODELE NUMERIQUE D'UNE ROUTE**
VERFAHREN ZUR ERSTELLUNG EINES DIGITALEN STRASSENMODELLS
METHOD OF CONSTRUCTING A DIGITAL ROAD MODEL

(30) Priorité: 23.10.2006 FR 0609275
(43) Date de publication de la demande: 22.07.2009
(73) Titulaire: NODBOX, 06560 Valbonne (FR)
(72) Inventeur: FARGAS, Thierry, 06000 Nice (FR); CLARAC, Dominique, 06000 Nice (FR)
(74) Mandataire: Decobert, Jean-Pascal
(86) Numéro de dépôt international: PCT/EP2007/061267
(87) Numéro de publication internationale: WO 2008/049800

(56) Documents cités:
- EP-A- 1 098 168
- ROPER PHILIP: "Data collection technology at ARRB Transport Research" ROAD TRANSP RES; ROAD AND TRANSPORT RESEARCH MARCH 2004, vol. 13, no. 1, mars 2004 (2004-03), pages 88-91, XP009096933
- ROGERS S: "Creating and evaluating highly accurate maps with probe vehicles" 1 octobre 2000 (2000-10-01), INTELLIGENT TRANSPORTATION SYSTEMS, 2000. PROCEEDINGS. 2000 IEEE OCTOBER 1-3, 2000, PISCATAWAY, NJ, USA,IEEE, PAGE(S) 125-130 , XP010520527 ISBN: 0-7803-5971-2 page 125, colonne de gauche, alinéa 1 - page 126, colonne de droite, alinéa 1; figure 1 page 127, colonne de gauche, alinéas 2,3 page 128, colonne de droite, dernier alinéa

## Description

La présente invention concerne un procédé de construction d'un modèle numérique d'une route, une méthode de détermination d'un algorithme routier localisé et adaptatif (ci-après en abrégé ALA), ainsi qu'un dispositif de mise en oeuvre.

Bien que l'invention ne s'y limite pas, les applications d'aide à la navigation ont connu un succès croissant ces dernières années et ont mis en évidence les besoins importants en ce qui concerne les applications routières.

L'invention propose une réponse à ces besoins qu'il s'agisse d'optimisation cartographique ou de gestion des routes, ceci comprenant l'aide à la surveillance de l'état des routes, la détection de dangers, l'aide à la conduite pour les conducteurs de véhicules avec, par exemple, la génération d'alerte en cas de situation dangereuse imminente (par exemple : dépassement de limite d'adhérence, obstacle...).

Il s'agit d'un procédé qui permet de confronter puis d'agréger les variables disponibles définissant une route avec les contraintes d'une application et les contraintes du processus et de l'ordonnancement qui sont associées à cette application. Cette confrontation peut être établie à partir des bases de données existantes, à partir des données en provenance des véhicules de relève et de capture de données, à partir des données en provenance des centres de gestion des routes et à partir des centres de création des cartographies routières embarquées. La confrontation permet de valider la capacité d'une variable à un instant, au regard de l'ensemble des variables disponibles, à être agréger avec d'autres variable pour répondre à un usage particulier dans le respect des contraintes de processus et d'ordonnancement d'une application particulière. L'agrégation des variables permet la détermination d'algorithmes routiers localisés et adaptatifs en regard de l'application choisie. Ces algorithmes sont localisés à une portion de la route, ils définissent des dangers, des risques et tout type d'informations et de caractéristiques de cette route en fonction des éléments qui varient régulièrement comme la pluie, l'eau, la vitesse d'un véhicule. L'invention permet de mettre à jour en temps réel la valeur des algorithmes routiers ainsi obtenus. Dans le cadre d'une application déterminée, de nouvelles mesures, de nouvelles variables, de nouvelles informations empiriques ou de nouveaux traitements font évoluer l'agrégation de variables contenues et donc de l'impact la précision et la confiance dans l'algorithme obtenu et dans les résultats issus de son utilisation. L'invention permet aussi pour une application particulière de déterminer la confiance et la qualité de l'information que l'on peut obtenir avec les variables existantes et de suggérer les traitements ou les compléments de précision à recueillir pour augmenter la qualité ou la confiance de cette information. L'invention permet également à partir des algorithmes obtenus de calculer la valeur précise à un moment donné de l'information en temps réel.

L'invention a également trait à un dispositif qui peut être connecté à distance ou être installé dans un véhicule de relevé et de capture de données routières, dans un centres de calcul de supervision et de gestion des routes, dans un SIG (pour système d'information géographique), dans un centre de création des cartographies routières pour l'embarqué, le dit dispositif produisant des algorithmes routiers localisés et adaptatifs. Les dits algorithmes étant utilisés par les gestionnaires des routes et les systèmes de navigation embarquée pour connaître à un moment donnée la valeur précise et la localisation d'une caractéristique ou d'un risque.

Il n'existe actuellement aucun système capable de déterminer une diversité d'algorithmes routiers localisés et adaptatifs à partir de données existantes ou à partir des informations transmises par les centres de gestion des routes, ou à partir des données contenus dans les SIG, ou à partir des données transmises par les centres de création des cartographies embarquées.

On connaît les mesures réalisées par les camions de l'équipement ou par des camions similaires utilisés par des prestataires, qui fournissent des valeurs de CFT (pour coefficients de frottement transversal) et de CFL (pour coefficient de frottement longitudinal), les résultats communiqués aux collectivités locales sont insuffisants pour appréhender finement les risques liés à l'adhérence, en effet ces valeurs doivent être rapprochées de la vitesse du véhicule utilisateur et des conditions climatiques temps réel. Chaque revêtement réagit de façon particulière à un ensemble de paramètres. Une seule information statique ne suffit pas à renseigner sur l'aspect dynamique nécessaire.

On connaît les cartographies numériques éditées par les sociétés comme NAVTEQ et TELEATLAS (marques déposées), et la façon dont sont captées les données, avec un seul DGPS et des caméras, et la façon dont sont mise en forme ces données, on constate que toutes les informations produites sont statiques et ne concourent pas à qualifier les caractéristiques de la route telle que par exemple les dévers et la qualité du revêtement.

On connaît les échecs des tentatives de recueil d'informations qualitatives de la route auprès des collectivités par ces mêmes sociétés de cartographie pour navigation. La nature, la dynamique, la diversité et l'hétérogénéité des informations rendent impossible par l'état de l'art la retranscription sur une carte.

On connaît l'échec de la création au niveau européen d'une cartographie MAP and ADAS (pour carte et advanced driving assistance system), les protagonistes ont tentés de normaliser la collecte d'informations de sécurité sans tenir compte de la dimension dynamique des données routières.

On connaît l'impossibilité des SIG utilisés par les collectivités locales d'intégrer des éléments dynamiques et adaptatifs au contexte d'utilisation.

On connaît les systèmes de gestion de bases de données et en particulier celui du leader ORACLE (marque déposée), qui fournissent des solutions d'extraction de fusion de gestion des bases de données mais qui ne sont pas à même de moduler l'appréhension d'une variable par son usage et qui ne permettent pas de comparer et d'agréger des données routières.

Le document EP 1 098 168 A2 décrit un procédé de construction d'un modèle numérique de route pour une base de données géographique. Pour ce modèle un jeu de données relatives à la géométrie de la route est relevé au moyen d'une centrale inertielle hybridée avec un système de positionnement global. Les données relevées sont classées par rapport à leur niveau de confiance et les valeurs aberrantes dont le niveau de confiance est trop bas sont supprimées pour obtenir un jeu de données corrigées.

Il existe donc un besoin de proposer un dispositif et un procédé améliorés permettant de confronter les caractéristiques de variables à d'autres variables au regard d'une application d'un processus et de ses contingences, et permettant d'agréger les dîtes variables, de sorte à pouvoir déterminer des algorithmes routiers permettant de porter des indications numériques adaptatives et localisées ADAS sur les cartographies de navigation routière et de fournir aux gestionnaires des routes des algorithmes qui leur permettent d'appréhender pour une portion de route précise des éléments caractéristiques de cette route en regard des changements quotidiens possibles.

Suivant l'art antérieur, il existe un préjugé constant à penser que l'information stockée sur les SIG ou dans les bases de données routières est fixe et que le sens d'une variable est indépendant de son usage du processus et des contraintes d'ordonnancement qui l'accompagnent. L'invention surmonte ce préjugé en préconisant un système pouvant certes utiliser des variables constantes et fixes, mais assurant aussi une analyse de l'incidence et des performances des variables en fonction de leur destination et de l'application et des contraintes de processus et d'ordonnancement.

Suivant une application la présente invention est destinée à enrichir les cartographies routières destinées à la navigation d'informations compatibles et utiles aux applications ADAS dans les véhicules.

Suivant une autre application la présente invention est destinée à la production pour les gestionnaires d'informations routières qui permettent de mieux gérer les routes et leur usage.

D'autres buts et avantages apparaîtront au cours de la description détaillée qui va suivre qui n'a cependant pas pour but de limiter l'invention.

Auparavant il est rappelé que la présente invention concerne un procédé de construction d'un modèle numérique d'une route caractérisé par le fait qu'il comporte les étapes consistant à acquérir un premier jeu de données relatives à la géométrie de la route au moyen d'un système de positionnement global différentiel (DGPS), acquérir un deuxième jeu de données relatives à la géométrie de la route au moyen d'une centrale inertielle hybridée avec un système de positionnement global (GPS), indexer les valeurs desdits premier et deuxième jeux de données par détermination de leur niveau de confiance, supprimer les valeurs desdits premier et deuxième jeux de données en deçà d'un seuil de confiance prédéfini pour obtenir un premier jeu et un deuxième jeu de données corrigés, agréger les données desdits premier et deuxième jeux de données corrigés pour obtenir le modèle numérique de la route.

Suivant une des variantes préférées mais non limitatives, le procédé est tel que :
- il comporte en outre un raffinement du modèle obtenu par agrégation de données, ledit raffinement consistant à ajouter des points de référence géométriques obtenus au moyen d'un système de positionnement global différentiel à précision topographique (TDGPS),
- l'acquisition du premier et deuxième jeu de données s'effectue par déplacement d'un véhicule de mesure sur la route,
- simultanément à l'acquisition du deuxième jeu de données, on acquiert des données additionnelles de caractérisation de la route,
- l'acquisition de données additionnelles comprend une capture vidéo et on traite le ou les signaux vidéo de sorte à extraire des caractéristiques multidimensionnelles de la route choisies parmi : la largeur de la chaussée, hauteur d'édifices, panneaux de signalisation,
- on incorpore au modèle numérique des données issues de bases de données de centres de gestion des routes.

La présente invention concerne aussi une méthode de détermination d'un algorithme routier localisé et adaptatif ALA pour une application à la cartographie ou à la gestion des routes.

Cette méthode est telle que :
a- on construit un modèle numérique d'une route par mise en oeuvre du procédé de construction de l'invention,
b- on choisit un lot de variables influentes en fonction de l'application,
c- on indexe puis on agrège les variables avec les données du modèle numérique,
d- on détermine un niveau de confiance des valeurs, des variables et des données du modèle numérique,
e- on construit l'algorithme ALA si le niveau de confiance et la disponibilité des variables est au-dessus de seuils prédéfinis.

A titre préféré :
- Les étapes b, c et d sont faites en parallèle par mise en oeuvre de plusieurs processus de création d'algorithme ALA, on choisit le résultat du processus qui confère le meilleur compromis de confiance et de disponibilité de variables en application de règles de contrainte de précision prédéfinies.
- si le niveau de confiance est inférieur au seuil prédéfini, on détermine les variables manquantes pour atteindre le seuil et on réitère les étapes b, c, d en incorporant lesdites variables,
- on crée un algorithme ALA complexe par association d'une pluralité d'algorithmes ALA obtenus par les étapes a, b, c, d, e,
- le processus de création d'ALA mis en oeuvre pour les étapes b, c, d est choisi parmi l'interrogation de connaissance, l'extraction de connaissance, le clonage de comportements, l'optimisation sous contraintes, l'identification de processus, la résolution des problèmes à l'inverse, la détermination de précurseurs, la recherche de liens de causes à effets, la recherche de facteurs influents sur les conséquences , l'analyse de l'interaction entre variables, l'analyse de corrélation entre variables, le rejet d'aberrations,
- l'application de l'algorithme ALA est la détermination d'une ou plusieurs des informations suivantes : le coefficient adaptatif localisé de frottement transversal, la distance adaptative localisée de freinage, la distance adaptative localisée d'accélération, la distance adaptative localisée d'approche, le positionnement adaptatif des trajectoires cibles des véhicules, le précurseur adaptatif de la localisation adaptative des moyens de protection, l'information localisée adaptative sur les dangers de géométrie de la route, l'information localisée adaptative sur les dangers du code de la route, le précurseur adaptatif de la création de zones ZAAC, la localisation adaptative d'accumulation d'eau, la localisation adaptative de la visibilité,
- la détermination de l'algorithme ALA s'effectue au moyen d'un circuit du type réseau de portes programmable in situ pour un traitement des données fortement parallèle,
- la détermination de l'algorithme ALA s'effectue par un réseau de neurones formel,
- la détermination de l'algorithme ALA s'effectue par des algorithmes génétiques.

Les dessins ci-joints sont donnés à titre d'exemple et ne sont pas limitatifs de l'invention. Ils représentent un mode de réalisation de l'invention et permettront de la comprendre aisément.
La figure 1 donne un extrait de la table de correspondance non limitative entre certaines couches regroupant les données et le type de données qui les constituent, les données selon les couches peuvent être des données résultats fruits de traitements ou de simples données ingrédients.

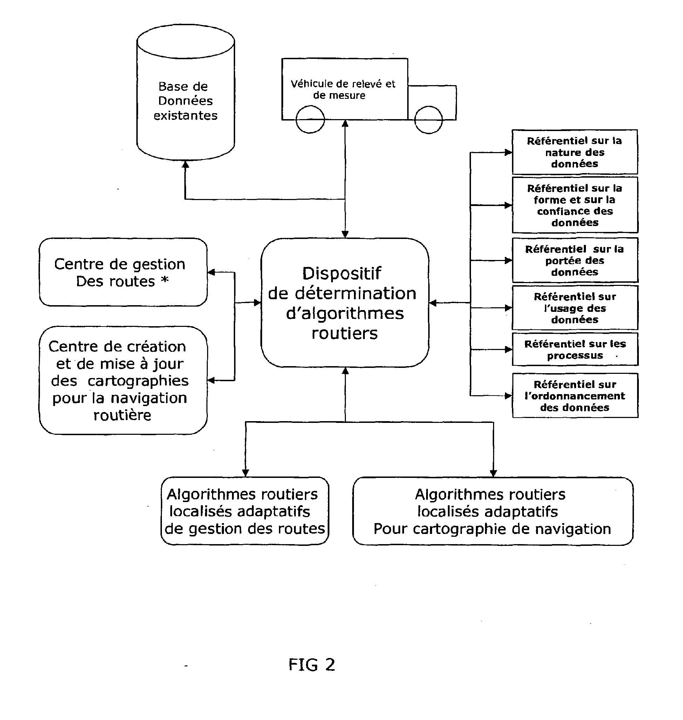

La figure 2 explique le positionnement du procédé au regard de la liaison avec les sources de données.

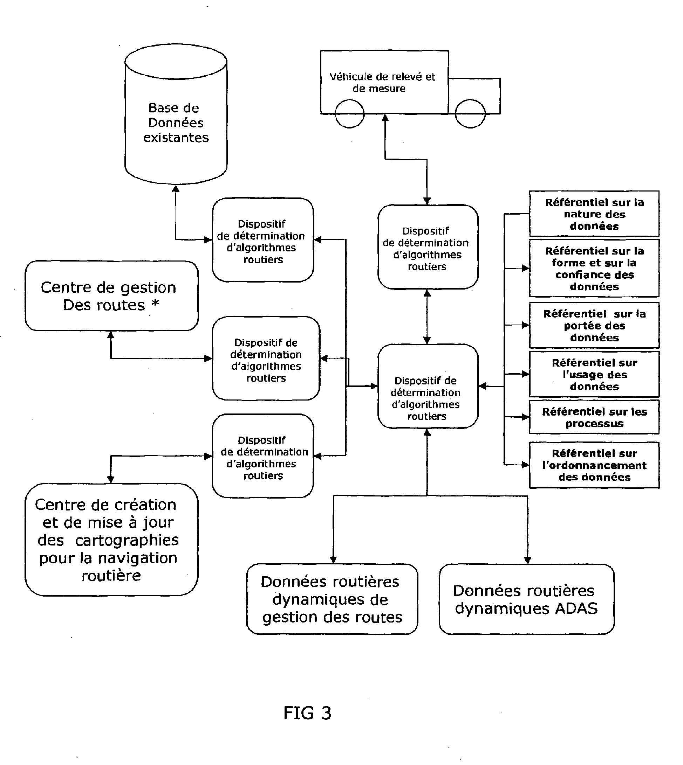

La figure 3 illustre la possibilité de répartir, d'éloigner ou de diviser le procédé ou le dispositif.

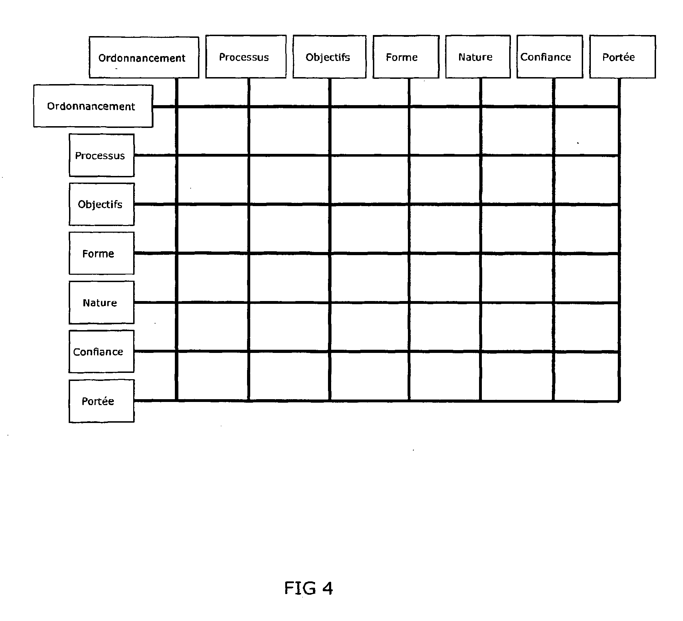

La figure 4 schématise la façon dont sont mises en rapport les macro données en regard de la structure matricielle d'un FPGA.

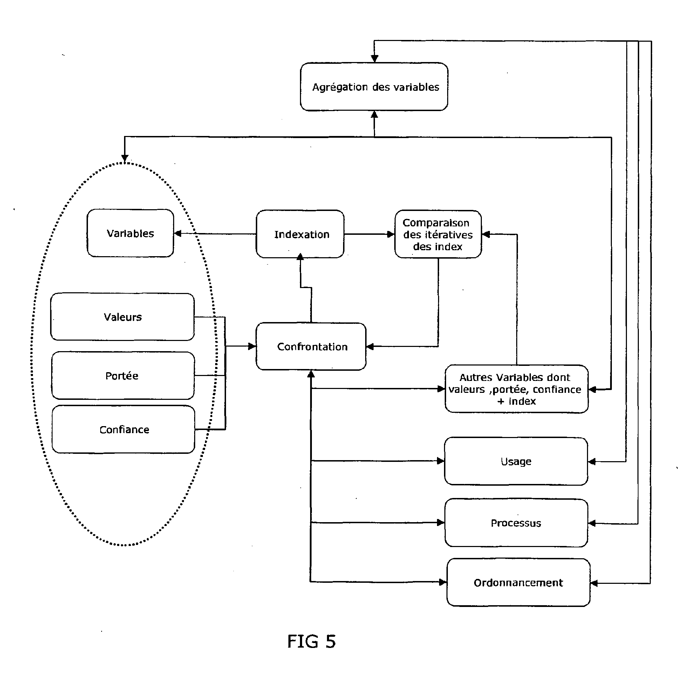

La figure 5 montre le lien entre les différentes étapes du procédé et de la détermination des algorithmes.

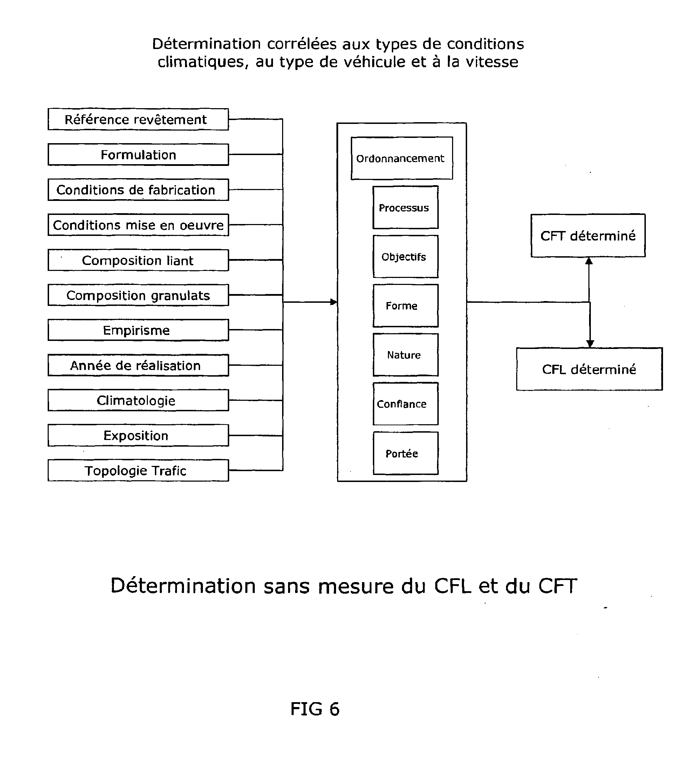

La figure 6 illustre la variété d'appartenance et de sources d'informations disponibles lorsque l'ont veut procéder à la détermination des CFL et CFT sans utiliser de captures de mesures terrains.
Les figures 7 et 8 sont d'autres schématisations des étapes de la méthode de l'invention dans la perspective de détermination d'une ALA ici pour évaluer l'adhérence d'une route. La fonction de détermination du procédé balaye en temps réel chaque "valeur, portée, confiance" de toutes les données ou les séquences de données et analyse leur influence conjointe sur le résultat souhaité dans un usage donné pour un processus précédemment déterminé. Les résultats de cette phase exploratoires sont indexés et stockés dans la table d'indexation relative au processus et à l'ordonnancement.

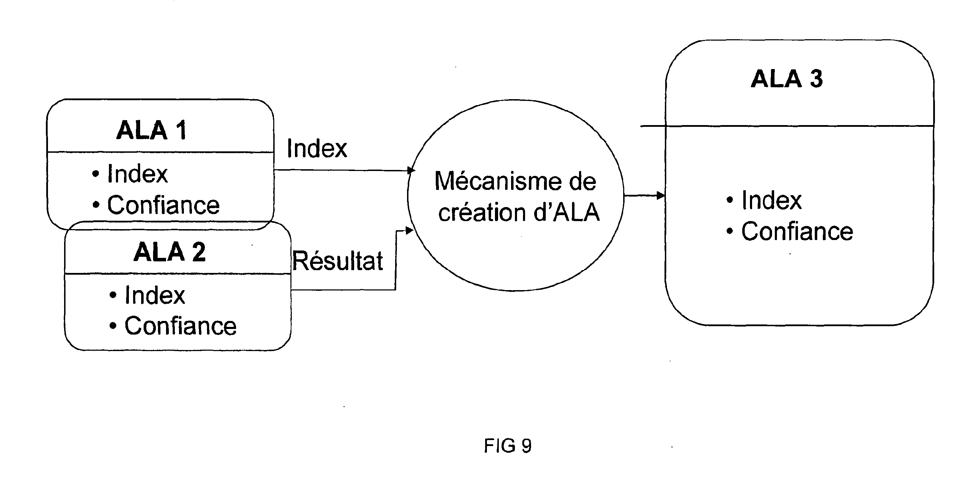

La figure 9 illustre la possibilité de composer un ALA, appelé ici pour principe ALA complexe, à partir de plusieurs ALA déjà déterminé. Suivant ce mécanisme de création, on récupère et on utilise soit directement la sortie des ALA soit l'index créé par d'autres ALA.

Quelques définitions de termes sont données ci-après pour une bonne compréhension de la suite de la description :
- **Portée d'une variable :** c'est la forme sous laquelle est contenue l'information de la variable.

Ex : variables dynamiques, variables statiques, variables numériques, variables étiquettes, variables catégories, variables tout ou rien, variables décrivant les configurations et les variables indexant les configurations.
- **Confiance :** grandeur statistique attribuée à une valeur qui quantifie sa précision en regard des paramètres de capture , de la portée de la variable , de son utilisation conjointe avec d'autres variables. Cette valeur est exprimée en pourcentage.
- **Usage :** conditions spécifiques dans laquelle l'ALA est utilisé.

Ex : famille de véhicule, route sèche, humide, mouillée...
- **Application ALA :** fonctionnalité finale de l'ALA

Ex : ALA adhérence, ALA positionnement, ALA gel, etc.
- **Processus :** mécanisme de création de l'ALA

Ex : interrogation de connaissances, extraction de connaissances, optimisation, etc....
- **Ordonnancement :** endroit où l'on peut trouver les données.

Ex : la gestion des bases de données filles secondaires, la gestion des bases de données mères index, la gestion des versions des bases de données, l'équivalence des géocodages et des PR (points repères des gestionnaires de routes) et des PK (points kilométriques ou bornes kilométriques), l'intégrité des données, l'information à la demande et les données objets.

Un premier aspect de l'invention consiste en la création de modèles numériques de routes. Le terme route s'entend de tout tronçon de voie(s) de circulation de véhicules quels qu'ils soient.

Un exemple des étapes mises en oeuvre est donné ci-après.

A l'heure actuelle, les cartographies embarquées sont composées de points de forme (Shape-Points) et de points d'intérêt (POI), ce qui n'est pas suffisant pour développer des fonctions de sécurité embarquée. Il faut donc agréger des informations relatives à la géométrie de la route pour venir les superposer à la cartographie existante.

Un problème se pose cependant, de telles fonctions ADAS nécessitent une précision dans la géo-localisation des éléments qu'aucun service de capture à grand rendement n'est capable de fournir actuellement.

La première étape de création d'informations routières dynamiques ADAS pour la cartographie de navigation est de minimiser ces erreurs de localisation de mesure.

Pour ce faire l'invention met en oeuvre :
- un dispositif DGPS précis dans l'absolu (sub-métrique) mais sujet aux pertes de signaux satellites (dans les gorges, les lieux boisés, les villes, etc.) et avec une fréquence de rafraîchissement faible.
- une centrale inertielle hybridée GPS, qui a une précision plus faible que le DGPS dans l'absolu mais qui dispose d'une grande précision en relatif (entre 2 points consécutifs) et d'une fréquence de rafraîchissement élevée.

On commence par effectuer une indexation des valeurs de ces 2 trajectographies ce qui permet de déterminer la confiance que l'on peut attribuer à chaque point, vis-à-vis de la position des satellites, de l'environnement, des valeurs fournies par les accéléromètres, etc.

Cette indexation permet de supprimer les valeurs aberrantes des trajectographies, on dispose donc maintenant de deux trajectographies propres, l'une précise en relatif, l'autre en absolu.

L'agrégation de ces 2 trajectographies permet d'obtenir une représentation de la route à 1 dimension de grande précision avec une fréquence de rafraîchissement élevée.

Cette numérisation peut-être vérifiée par l'utilisation d'un DGPS à précision topographique qui permet d'ajouter des points de référence à l'agrégation précédente et conforte ainsi la confiance accordée à ces variables de localisation.

Chaque transformation subie par les points de mesure lors de leur correction est enregistrée afin de pouvoir corriger la géo-localisation de l'ensemble des valeurs fournies par les différents capteurs du dispositif de mesure.

Cette partie peut nécessiter également un recalage. En effet les capteurs sont disposés de toute part dans le camion de capture et nous ne disposons au final que d'une seule trajectographie GPS. Un processus a été mis en place pour calculer la géo-localisation de chacune des mesures à partir des côtes de la position des capteurs dans le camion, de la trajectographie corrigée ainsi que le cap du camion.

On dispose maintenant des géo-localisations des valeurs que l'on peut agréger avec des informations extraites de vidéos avant et arrière. A cet effet est mis en place un processus de géo-localisation automatique des éléments visualisés sur les vidéos et leur ventilation dans une base de donnée.

Ce processus est ici utilisé pour repérer les largeurs de chaussées, les hauteurs de pont, les panneaux, etc. Et donc ainsi on recale les valeurs précédemment calculées à la route ce qui permet de numériser celle-ci en 3 dimensions.

Pour ce faire on dispose des données de profil longitudinal, profil transversal et devers, roulis, tangage et cap, rayons de courbure minimum et moyen, resserrement, qui sont confrontées avec la base de connaissance de la géométrie de la route et son incidence sur le véhicule pour en tirer l'information propre à la route avec une grande confiance. Une fois ce travail réalisé, on crée des plaques géométriques en 3 dimensions auxquelles on peut rattacher des attributs de sécurité.

Par ce processus d'indexation, de confrontation et d'agrégation de variables, on crée un modèle numérique de la route en 3 dimensions qui sera le support de tous les algorithmes ALA développés.

Une application significative de la présente invention consiste à la détermination des risques induits par un revêtement routier au regard de son état. Les collectivités locales françaises comme les conseils généraux ou les communes en charge de la gestion des routes ne disposent pas, pour toutes les routes dont ils ont la gestion, de mesures complètes donnant l'état du revêtement. Certaines de ces routes dont l'état est jugé critique font l'objet par les services de l'équipement de mesures d'uni fréquences hautes, basses, moyennes, et de mesures de micro, macro, et méga structure. Ces mesures sont réalisées selon des normes précises et les services des CETE en charge de les exécuter remettent aux collectivités des procès verbaux (PV) précisant des valeurs en référence à des normes de capture, avec un commentaire associé. Lorsqu'ils existent ces PV sont difficilement exploitables; comment déterminer le niveau de risque? Comment décider s'il faut ou non refaire le revêtement? La plupart du temps ces PV de mesures n'existent d'ailleurs pas, la collectivité décide alors de refaire ses chaussées selon par exemple un roulement décennal qui est fonction des budgets disponibles, sans tenir vraiment compte de l'usure ou de l'inadéquation réelle du revêtement existant.

On indique ci-après à titre indicatif une suite d'étapes chronologiques aboutissant à la création d'un ALA. Un exemple pratique appliqué à l'adhérence est ensuite détaillé.

### Chronologie

### Analyse des variables

1. Listage exhaustif des variables disponibles ou récupérables avec leur portée et confiance.
2. Référencement de leur ordonnancement.

### Indexation pour une application, usage et processus donné

3. Détermination du résultat souhaité et de son usage ainsi que du processus de détermination de l'ALA.
4. Détermination des variables influentes sur le résultat souhaité en fonction de l'usage et du processus.
5. Indexation du résultat

### Confrontation

6. On confronte les variables indexées aux contraintes apportées par l'usage, le processus et l'ordonnancement.
7. Ce qui permet de déterminer pour chaque processus et jeu de variables une confiance et une disponibilité de données.

### Choix

8. On obtient alors n valeurs de confiance et de disponibilité de données pour chacun des processus retenus. L'algorithme de choix va déterminer la solution la plus adaptée en regard de la contrainte de confiance, d'accessibilité des variables et complexité de l'ALA.
9. Si aucune solution ne parvient à satisfaire les contraintes, les variables manquantes sont déterminées. Un fois celles-ci indexées, on reprend tout le processus.

### Création de l'ALA "adhérence"

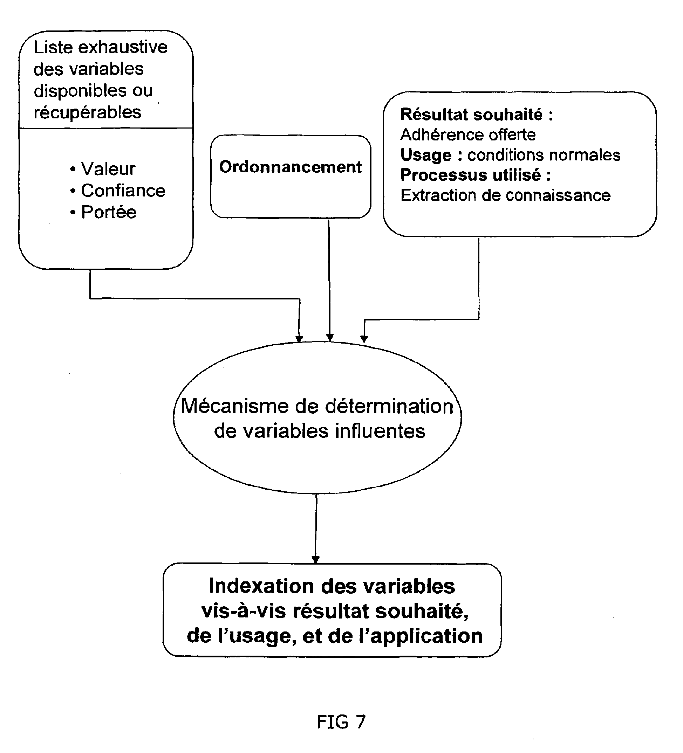

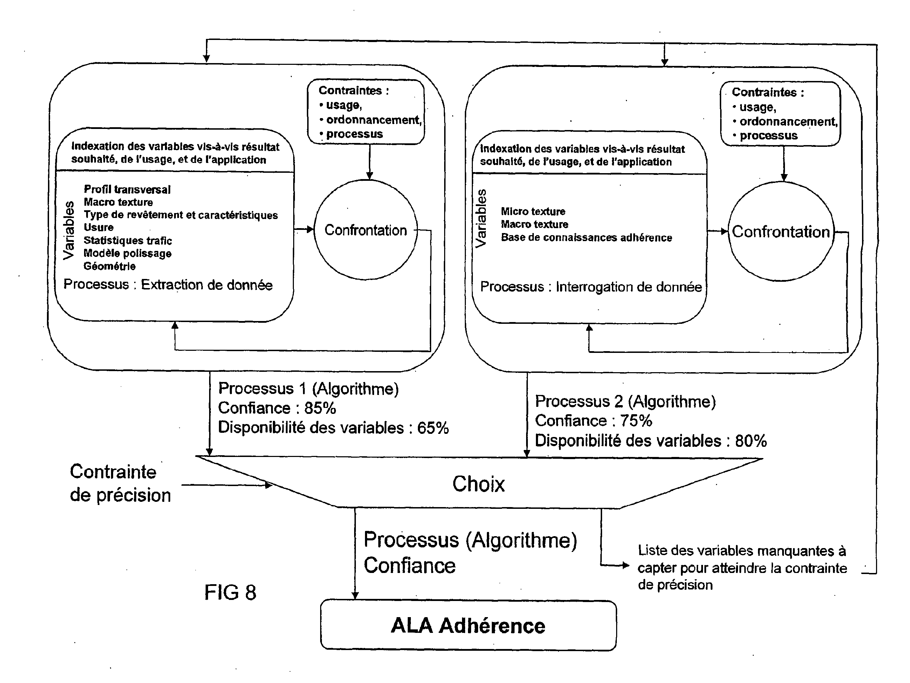

Les figures 7 et 8 montrent en détail des phases de détermination d'un algorithme ALA pour une application "adhérence" non limitative de l'invention.

Les données suivantes sont utilisées dans cet exemple :
Camion de capture :
   - Trajectographie DGPS
   - Trajectographie GPS hybridé centrale inertielle
   - Devers
   - Déformations ponctuelles de la chaussée
   - Largeurs et profondeurs d'ornières droites et gauches
   - Affaissements de rives
   - Profil transversal de la route
   - Profil longitudinal de la route
   - Macro texture
   - Roulis
   - Tangage
   - Cap
   - Accélération 3 axes
   - Rayons de courbures minimum et moyen avec type de resserrement (début de virage, fin de virage, nul)
   - Vidéos avant et arrières
Adhérence :
   - Micro texture
   - Macro texture
   - Adhérence offerte
   - Drainabilité
   - Empirisme
Données du gestionnaire de routes :
   - Empirisme
   - Types de revêtements
Laboratoire central des Ponts et Chaussées :
   - Empirisme
   - Modèles
Divers :
   - Modèles environnementaux

Un grand nombre de données, variables, processus, applications ou autres sont utilisables par l'invention. On en énonce ou rappelle ci-après les différents aspects.

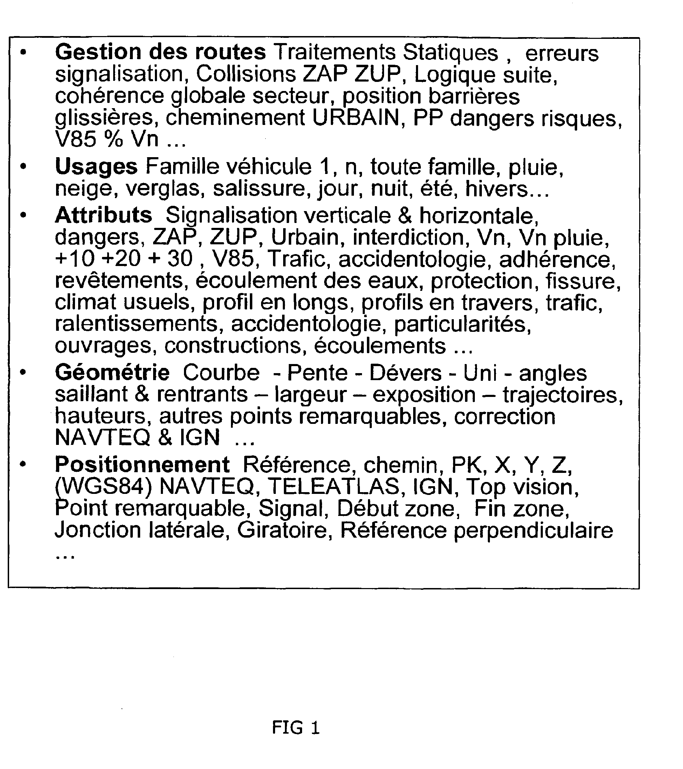

Les étapes de création de l'ALA peuvent comprendre :
- définir la nature des données,
- définir la forme et la confiance des données,
- définir la portée des données,
- définir l'application qui va utiliser les données,
- définir le processus de traitement des données,
- définir l'ordonnancement des données associées à l'application et au processus,
- déterminer les algorithmes routiers localisés et adaptatifs.
   A titre préféré, ce procédé est tel que
- la nature des données est choisie parmi des couches thématiques de données, la couche géométrique, la couche positionnement, la couche attributs, la couche usage, la couche dynamique, la couche gestion des routes, et la couche embarquée, certaines de ces couches étant détaillées dans la figure 1,
- la forme et la confiance des données est choisie parmi, la mesure, le calcul, le calage de connaissance, les statistiques, l'empirisme, l'appartenance à une propriété et la simulation, chacune de ces formes ayant une définition de confiance et de stabilité spécifique,
- la portée des données est choisie parmi, les variables dynamiques, les variables statiques, les variables numériques, les variables étiquettes, les variables catégories, les variables tout ou rien, les variables décrivant les configurations et les variables indexant les configurations,
- l'application est choisie parmi, la fonction entretien de la route, la fonction construction de la route, la fonction sécurisation de la route, la fonction exploitation de la route, le guidage trafic pour parcours particuliers, la qualification des limites de vitesses, le traitement des difficultés techniques spécifiques aux subdivisions territoriales locales, l'analyse des ZAAC (zones d'accumulation d'accidents corporels) et des fiches et des lieux critiques, la remise en cohérence d'itinéraires, la qualification des revêtement en regard des risques usagers, le traitement des fichiers accidentologie, la création de couche ADAS pour la cartographie de navigation,
- le processus est choisi parmi, l'interrogation de connaissance, l'extraction de connaissance, le clonage de comportements, l'optimisation sous contraintes, l'identification de processus, la résolution des problèmes à l'inverse, la détermination de précurseurs, la recherche de liens de causes à effets, la recherche de facteurs influents sur les conséquences, l'analyse de l'interaction entre variables, l'analyse de corrélation entre variables, le rejets d'aberrations,
- l'ordonnancement des données est choisi parmi, la gestion des bases de données filles secondaires, la gestion des bases de données mères index, la gestion des versions des bases de données, l'équivalence des géocodage et des PR et des PK, l'intégrité des données, l'information à la demande et les données objets, les passerelles objectifs informations données, la supervision virtuelle, l'origine destination des données,
- les algorithmes routiers localisés et adaptatifs sont choisis parmi, le coefficient adaptatif localisé de frottement transversal, le coefficient adaptatif localisé de frottement longitudinal, la distance adaptative localisée de freinage, la distance adaptative localisée d'accélération, la vitesse adaptative localisée d'approche, le positionnement adaptatif des trajectoires cibles des véhicule, le précurseur adaptatif de la saturation du trafic, la localisation adaptative des moyens de prévention, la localisation adaptative des moyens de protection, l'information localisée adaptative sur les dangers de géométrie de la route, l'information localisée adaptative sur les dangers du code de la route et les priorités, le précurseur adaptatif de la création de zones ZAAC, la localisation adaptative d'accumulation d'eau, la localisation adaptative de la visibilité,
- la détermination des algorithmes routiers adaptatifs s'effectue avec tous moyens de calculs mathématiques et physiques adaptés aux contraintes déterminées
- la détermination des algorithmes routiers adaptatifs s'effectue avec un FPGA (pour field programmable gate array), qui réalise en temps réel des calculs massivement parallèles
- la détermination des algorithmes routiers localisés et adaptatifs s'effectue avec un réseau de neurones formel,
- la détermination des algorithmes routiers localisés et adaptatifs s'effectue avec des algorithmes génétiques,
- la détermination des algorithmes routiers localisés et adaptatifs s'effectue avec des algorithmes de logique floue,
- il comporte une étape préalable de comparaison de la valeur, de la portée et de la confiance des données ou des séquences de données avec les autres valeurs portée et confiance des autres données avec l'application et les contraintes de processus et d'ordonnancement associées,
- la fonction de détermination du procédé balaye en temps réel toutes les données ou les séquences de données issues des étapes de définitions selon une technique décrite ici mais non limitative, successivèment chaque « valeur, portée, confiance » de chaque donnée ou séquence de données est comparée aux exigences de l'usage du processus et de l'ordonnancement et aux autres valeurs portée et confiance de chaque autre donnée ou séquence de données,
- Il comporte une deuxième étape d'indexation dans laquelle les résultats de la comparaison sont indexés et stockés dans la table d'indexation de la donnée relative à l'application au processus et à l'ordonnancement,
- Il comporte une troisième étape durant laquelle les autres données prennent en compte la réalité de cette nouvelle indexation et suite à leur propre comparaison aux exigences de l'usage et du processus et de l'ordonnancement, s'indexent à leur tour, le mécanisme est itératif et s'équilibre progressivement pour chaque tronçon de route et pour chaque usage possible,
- Il comporte une quatrième étape, dans laquelle au regard des contraintes processus ordonnancement et usages on détermine les combinaisons de données, qui sont alors qualifiées variables, qui apportent les meilleures réponses et qualifie la pertinence et l'acceptabilité du risque associé au niveau de réponse aux conditions particulières et aux types de véhicules, l'opérateur peut demander au système les alternatives de diminution des risques, ce dernier indiquera les potentialités d'amélioration, par exemple renforcer la confiance de telle famille de données ou adjoindre des mesures complémentaires localisées, dans tous les cas les résultats des traitements seront intégrés sous formes de nouvelles variables dont les valeurs, la portée et la confiance pourront évoluer suite à de nouveau traitements inhérents au processus et seront définis selon le mode de définition des étapes précédentes et seront traitées par l'étape de détermination, le résultat de la détermination peut être délivré sous la forme d'une association d'information, d'une information synthétique croisée, d'un algorithme, ou d'une association de valeurs, ou d'une combinaison de l'ensemble,
- le procédé de détermination des données peut être unique, réparti en plusieurs sous procédés, localisé ou réalisé à distance.

La présente innovation apporte plusieurs révolutions dans le quotidien des gestionnaires des routes, elle permet d'abord de bien comprendre la notion de complexe, de systémique appliquée à chaque thématique, elle permet dans cet exemple précis d'établir un inventaire de toutes les données disponibles relatives à l'adhérence offerte (CFL et CFT), elle permet de comprendre quelles associations de données peuvent produire une information pertinente et quelles sont les données de bases qui sont capitales.

Par exemple la caractéristique du granulat qui compose le revêtement va impacter le taux de polissage du dit revêtement ; selon la topologie du granulat utilisé localement, il sera important de connaître et d'associer l'âge et le type de trafic et d'exposition, pour certains autres granulats plus dur qui ne se polissent pas ou peu, la constitution et le mode de fabrication du liant seront à associer afin de déterminer la stabilité de fixation des granulats par le liant.

Autre apport fondamental que celui de la compréhension, une telle innovation apporte aux gestionnaires des routes un outil pour appeler les données disponibles en regard des problèmes qu'ils ont à résoudre, l'invention permet d'optimiser la connaissance en regard des informations dont ils disposent et permet de les guider dans la réalisation de mesures terrain très ponctuelles et très ciblées afin de prendre les bonnes décisions d'entretien.

Dans le cas des risques inhérents à la qualité de l'adhérence offerte, les algorithmes apporteront de façon localisée à chaque tronçon spécifique de route une valeur de CFT CFL déterminée adaptative à la vitesse des véhicules, au type de trafic, aux conditions de climat et à la géométrie de la route.

Le gestionnaire de la route pourra relativiser la valeur intrinsèque du CFL et du CFT, par exemple un CFL mauvais n'aura pas de conséquence dans un virage à passage lent, par contre un CFT excellent à basse vitesse pour un revêtement particulier peut s'avérer dangereux dans certaines courbe rapides.

Le nombre de cas d'utilisation des données et les variantes de combinaison est tel que le présent procédé est indispensable pour optimiser les actions des gestionnaires des routes.

Un tel procédé est applicable à nombre de problématiques dont les applications sont listées précédemment dans la description des étapes.

Les cartographes de navigation routière ont un problème encore plus basique que les gestionnaires des routes car ils ne sont pas capables de prendre en compte nombre de données et de caractéristiques routières fondamentales. Un tel procédé leur permet de redéfinir leur mode de capture au regard des exigences ADAS formulées par les équipementiers et par les constructeurs automobiles. Un tel procédé leur permet ensuite d'agréger les données ainsi obtenues et de produire des algorithmes localisés et adaptables stockés comme attributs dans leurs cartographie numériques.

## Revendications

1. Procédé de construction d'un modèle numérique d'une route comportant les étapes consistant à :
- acquérir un premier jeu de données relatives à la géométrie de la route au moyen d'un système de positionnement global différentiel DGPS,
- acquérir un deuxième jeu de données relatives à la géométrie de la route au moyen d'une centrale inertielle hybridée avec un système de positionnement global GPS,
- indexer les valeurs desdits premier et deuxième jeux de données par détermination de leur niveau de confiance,
- supprimer les valeurs desdits premier et deuxième jeux de données en deçà d'un seuil de confiance prédéfini pour obtenir un premier jeu et un deuxième jeu de données corrigés,
- agréger les données desdits premier et deuxième jeux de données corrigés pour obtenir le modèle numérique de la route.

2. Procédé selon la revendication 1 comportant en outre un raffinement du modèle obtenu par agrégation de données, ledit raffinement consistant à ajouter des points de référence géométriques obtenus au moyen d'un système de positionnement global différentiel à précision topographique TDGPS.

3. Procédé selon la revendication 1 ou 2 dans lequel l'acquisition du premier et deuxième jeu de données s'effectue par déplacement d'un véhicule de mesure sur la route.

4. Procédé selon la revendication 3 dans lequel simultanément à l'acquisition du deuxième jeu de données, on acquiert des données additionnelles de caractérisation de la route.

5. Procédé selon la revendication 4 dans lequel
- l'acquisition de données additionnelles comprend une capture vidéo et
- on traite le ou les signaux vidéo de sorte à extraire des caractéristiques multidimensionnelles de la route choisies parmi : la largeur de la chaussée, hauteur d'édifices, panneaux de signalisation.

6. Procédé selon une quelconque des revendications 1 à 5 dans lequel on incorpore au modèle numérique des données issues de bases de données de centres de gestion des routes.

7. Méthode de détermination d'un algorithme routier localisé et adaptatif ALA pour une application à la cartographie ou à la gestion des routes dans lequel :
a- on construit un modèle numérique d'une route par mise en oeuvre du procédé de construction selon une quelconque des revendications 1 à 6,
b- on choisit un lot de variables influentes en fonction de l'application,
c- on indexe puis on agrège les variables avec les données du modèle numérique,
d- on détermine un niveau de confiance des valeurs, des variables et des données du modèle numérique,
e- on construit l'algorithme ALA si le niveau de confiance et la disponibilité des variables est au-dessus de seuils prédéfinis.

8. Méthode selon la revendication 7 dans laquelle :
- à titre préféré, les étapes b, c et d sont faites en parallèle par mise en oeuvre de plusieurs processus de création d'algorithme ALA,
- on choisit le résultat du processus qui confère le meilleur compromis de confiance et de disponibilité de variables en application de règles de contrainte de précision prédéfinies.

9. Méthode selon la revendication 7 ou 8 dans laquelle si le niveau de confiance est inférieur au seuil prédéfini, on détermine les variables manquantes pour atteindre le seuil et on réitère les étapes b, c, d en incorporant lesdites variables.

10. Méthode selon une quelconque des revendications 7 à 9 dans laquelle on crée un algorithme ALA complexe par association d'une pluralité d'algorithmes ALA obtenus par les étapes a, b, c, d, e.

11. Méthode selon une quelconque des revendications 7 à 9, dans laquelle le processus de création d'ALA mis en oeuvre pour les étapes b, c, d est choisi parmi:
- l'interrogation de connaissance, l'extraction de connaissance, le clonage de comportements, l'optimisation sous contraintes, l'identification de processus, la résolution des problèmes à l'inverse, la détermination de précurseurs, la recherche de liens de causes à effets, la recherche de facteurs influents sur les conséquences, l'analyse de l'interaction entre variables, l'analyse de corrélation entre variables, le rejet d'aberrations.

12. Méthode selon une quelconque des revendications 7 à 10 dans laquelle l'application de l'algorithme ALA est la détermination d'une ou plusieurs des informations suivantes :
- le coefficient adaptatif localisé de frottement transversal, la distance adaptative localisée de freinage, la distance adaptative localisée d'accélération, la distance adaptative localisée d'approche, le positionnement adaptatif des trajectoires cibles des véhicules, le précurseur adaptatif de la localisation adaptative des moyens de protection, l'information localisée adaptative sur les dangers de géométrie de la route, l'information localisée adaptative sur les dangers du code de la route, le précurseur adaptatif de la création de zones ZAAC, la localisation adaptative d'accumulation d'eau, la localisation adaptative de la visibilité.

13. Méthode selon une quelconque des revendications 7 à 12 dans laquelle la détermination de l'algorithme ALA s'effectue au moyen d'un circuit du type réseau de portes programmable in situ pour un traitement des données fortement parallèle.

14. Méthode selon une quelconque des revendications 7 à 12 dans laquelle la détermination de l'algorithme ALA s'effectue par un réseau de neurones formel.

15. Méthode selon une quelconque des revendications 7 à 12 dans laquelle la détermination de l'algorithme ALA s'effectue par des algorithmes génétiques.

16. Méthode selon une quelconque des revendications 7 à 12 dans laquelle la détermination de l'algorithme ALA s'effectue par des algorithmes de logique floue.

## Patentansprüche

1. Konstruktionsverfahren eines digitalen Modells einer Straße, umfassend die Stufen, die bestehen aus:
- Erfassen eines ersten Datensatzes bezüglich der Geometrie der Straße mittels eines differenzialen, globalen Positionierungssystems DGPS,
- Erfassen eines zweiten Datensatzes bezüglich der Straße mittels einer hybridisierten Trägheitszentrale mit einem globalen Positionierungssystem GPS,
- Indexierung der Werte der genannten ersten und zweiten Datensätze per Bestimmung ihres Konfidenzniveaus,
- Löschung der Werte der genannten ersten und zweiten Datensätze über einen vorbestimmten Konfidenz-Schwellenwert hinaus, um einen ersten Satz und einen zweiten Satz korrigierter Daten zu erhalten,
- Eingliedern der Daten der genannten ersten und zweiten korrigierten Datensätze, um das digitale Modell der Straße zu erhalten.

2. Verfahren gemäß Anspruch 1, umfassend darüber hinaus eine Verfeinerung des Modells, das per Eingliederung von Daten erhalten wird, wobei die genannte Verfeinerung in dem Hinzufügen der geometrischen Referenzpunkte besteht, die anhand eines differenzialen, globalen Positionierungssystems mit topographischer Präzision TDGPS erhalten werden.

3. Verfahren gemäß Anspruch 1 oder 2, bei dem der genannte Erwerb des ersten und zweiten Datensatzes per Fortbewegung eines Messfahrzeugs auf der Straße erfolgt.

4. Verfahren gemäß Anspruch 3, bei dem gleichzeitig zum Erwerb des zweiten Datensatzes zusätzliche Charakterisierungsdaten der Straße erworben werden.

5. Verfahren gemäß Anspruch 4, bei dem
- der Erwerb von zusätzlichen Daten eine Videoerfassung umfasst, und
- das Videosignal oder die Videosignale derart behandelt wird oder werden, dass multidimensionale Merkmale der Straße extrahiert werden, die ausgewählt sind aus: der Breite der Fahrbahn, der Höhe von Gebäuden, Straßenschildern.

6. Verfahren gemäß Anspruch 1 bis 5, bei dem in das digitale Modell Daten eingegliedert werden, die aus Datenbanken aus Straßenverwaltungszentren stammen.

7. Bestimmungsverfahren eines lokalisierten und adaptativen Straßenalgorithmus ALA für eine Anwendung auf die Kartographie oder die Verwaltung von Straßen, bei dem:
a- ein digitales Modell einer Straße per Umsetzung des Konstruktionsverfahrens gemäß Anspruch 1 bis 6 aufgebaut wird,
b- ein Los von einflussreichen Variablen in Abhängigkeit von der Anwendung gewählt wird,
c- die Variablen mit den Daten des digitalen Modells indexiert und dann eingegliedert werden,
d- ein Konfidenzniveau der Werte, der Variablen und der Daten des digitalen Modells bestimmt wird,
e- der Algorithmus ALA aufgebaut wird, wenn das Konfidenzniveau und die Verfügbarkeit der Variablen über vordefinierten Schwelllenwerten liegen.

8. Verfahren gemäß Anspruch 7, bei dem:
- die Stufen b, c, und d bevorzugt parallel zur Umsetzung von mehreren Kreationsprozessen des Algorithmus ALA durchgeführt werden,
- das Ergebnis des Prozesses gewählt wird, der den besten Konfidenz- und Verfügbarkeitskompromiss von Variablen in Anwendung von vorbestimmten Vorgaberegeln der Präzision verleiht.

9. Verfahren gemäß Anspruch 7 oder 8, bei dem, wenn das Konfidenzniveau den bestimmten Schwellenwert unterschreitet, die fehlenden Variablen bestimmt werden, um den Schwellenwert zu erreichen und die Stufen b, c, d wiederholt werden, indem die genannten Variablen eingefügt werden.

10. Verfahren gemäße Anspruch 7 bis 9, bei dem ein komplexer Algorithmus ALA durch Zuordnung einer Vielzahl von Algorithmen ALA erstellt wird, die durch die Stufen a, b, c, d, e erhalten werden.

11. Verfahren gemäß Anspruch 7 bis 9, bei dem das Erstellungsverfahren von ALA, das für die Stufen b, c, d umgesetzt wird, ausgewählt ist aus:
- der Abfrage von Kenntnissen, der Extraktion von Kenntnissen, dem Klonen von Verhalten, der Optimierung unter Beanspruchung, der Identifizierung von Prozessen, der Lösung von Problemen in entgegengesetzter Richtung, der Bestimmung von Vorläufern, der Suche von Verbindungen zwischen Ursache und Wirkung, der Suche von einflussreichen Faktoren auf die Konsequenzen, der Analyse der Interaktion zwischen Variablen, der Analyse der Korrelation zwischen Variablen, der Ablehnung von Aberrationen.

12. Verfahren gemäß Anspruch 7 bis 10, bei dem die Anwendung des Algorithmus ALA die Bestimmung einer oder mehrerer der folgenden Informationen ist:
- der lokalisierte, adaptative Koeffizient der transversalen Reibung, der lokalisierte, adaptative Bremsweg, der lokalisierte, adaptative Beschleunigungsweg, der lokalisierte, adaptative Annäherungsweg, die adaptative Positionierung der Zielbahnen der Fahrzeuge, der adaptative Vorläufer der adaptativen Lokalisierung der Schutzmittel, die adaptative lokalisierte Information über die Gefahren der Geometrie der Straße, die adaptative, lokalisierte Information über die Gefahren der Straßenverkehrsordnung, der adaptative Vorläufer der Erstellung von Bereichen ZAAC, die adaptative Lokalisierung von Wasseransammlungen, die adaptative Lokalisierung der Sichtbarkeit.

13. Verfahren gemäß Anspruch 7 bis 12, bei dem die Bestimmung des Algorithmus ALA anhand eines Schaltkreises vom Typ programmierbares Türennetz in situ für eine erheblich parallele Verarbeitung der Daten erfolgt.

14. Verfahren gemäß Anspruch 7 bis 12, bei dem die Bestimmung des Algorithmus ALA durch ein formales Neuronennetz erfolgt.

15. Verfahren gemäß Anspruch 7 bis 12, bei dem die Bestimmung des Algorithmus ALA durch genetische Algorithmen erfolgt.

16. Verfahren gemäß Anspruch 7 bis 12, bei dem die Bestimmung des Algorithmus ALA durch Algorithmen unklarer Logik erfolgt.

## Claims

1. A method of constructing a digital model of a road comprising the steps consisting in:
- acquiring a first set of data relating to the geometry of the road by means of a differential global positioning system DGPS,
- acquiring a second set of data relating to the geometry of the road by means of an hybridized inertial unit with a global positioning system GPS,
- indexing the values of said first and second sets of data by determining the confidence level thereof,
- deleting the values of said first and second sets of data below a predefined confidence level in order to obtain a first set and a second set of corrected data
- aggregating the data of said first and second sets of corrected data in order to obtain the digital model of the road.

2. A method according to claim 1, further comprising a sophistication of the model obtained by the aggregation of data, said sophistication consisting in adding geometrical reference points obtained by means of a topographical accuracy differential global positioning system TDGPS.

3. A method according to claim 1 or 2, wherein the acquisition of the first and second sets of data is executed by having a measuring vehicle drive on the road.

4. A method according to claim 3, wherein additional data characterizing the road is acquired simultaneously with the acquisition of the second set of data.

5. A method according to claim 4, wherein
- the acquisition of additional data includes a video capture and
- the video signal(s) is (are) so processed as to extract multidimensional characteristics of the road chosen from: the width of the roadway, the height of buildings, the traffic signs.

6. A method according to any one of claims 1 to 5, wherein data from roads management centres databases is incorporated into the digital model.

7. A method for determining an ALA localized adaptive road algorithm for an application to the mapping or the management of roads wherein:
a- a digital model of a road is built by implementing the construction method according to any one of claims 1 to 6,
b- a batch of influential variables is selected, according to the application,
c- the variables are indexed and then aggregated with the digital model data,
d- a confidence level of the values, the variables and the digital model data is determined,
e- the ALA algorithm is constructed if the confidence level and the availability of the variables is above predefined thresholds.

8. A method according to claim 7, wherein:
- steps b, c and d are preferably executed simultaneously by implementing several ALA algorithm creation processes,
- the outcome of the process offering the best compromise as regards confidence and availability of variables is selected while conforming to predefined accuracy constraint rules.

9. A method according to claim 7 or 8, wherein if the confidence level is below the predefined threshold, the missing variables to reach the threshold are determined and steps b, c, d are repeated while incorporating said variables.

10. A method according to any one of claims 7 to 9, wherein a complex ALA algorithm is created by associating a plurality of ALA algorithms obtained by the steps a, b, c, d, e.

11. A method according to any one of claims 7 to 9, wherein the process of creating ALA implemented for steps b, c, d is selected from:
- knowledge interrogation, knowledge extraction, behaviour cloning, constrained optimization, process identification, problem reverse solving, determination of precursors, search for causal links, search for factors influencing the consequences, analysis of the interaction between variables, analysis of the inter-variables correlation, reject of aberrations.

12. A method according to any one of claims 7 to 10, wherein the application of the ALA algorithm is the determination of one or more of the following item(s) of information:
- the localized adaptive coefficient of transversal friction, the adaptive localized braking distance, the adaptive localized acceleration distance, the adaptive localized approach distance, the adaptive positioning of the vehicles target trajectories, the adaptive precursor of the adaptive location of the protection means, the localized adaptive information on the dangers of the road geometry, the localized adaptive information on the dangers of the traffic regulations, the adaptive precursor of the creation of ZAAC zones, the adaptive location of water accumulation, the adaptive location of visibility.

13. A method according to any one of claims 7 to 12, wherein the determination of the ALA algorithm is carried out by means of a circuit of the field programmable gate array type for a highly parallel data processing.

14. A method according to any one of claims 7 to 12, wherein the determination of the ALA algorithm is carried out with a formal neural network.

15. A method according to any one of claims 7 to 12, wherein the determination of the ALA algorithm is carried out by genetic algorithms.

16. A method according to any one of claims 7 to 12, wherein the determination of the ALA algorithm is carried out by fuzzy logic algorithms.
